## Europäisches Patentamt
## European Patent Office
## Office européen des brevets

(19)

(11) Publication number: **0 256 007**
**B1**

(12) # EUROPEAN PATENT SPECIFICATION

(45) Date of publication of the patent specification:
27.09.89

(51) Int. Cl.⁴: **F 16 F 1/18, B 60 G 11/10**

(21) Application number: 86901958.8

(22) Date of filing: 24.03.86

(86) International application number:
**PCT/GB 86/00165**

(87) International publication number:
**WO 86/05851 (09.10.86 Gazette 86/22)**

(54) SECURING COMPONENTS TO SPRINGS OF COMPOSITE MATERIAL.

(30) Priority: 03.04.85 GB 8508705

(43) Date of publication of application:
24.02.88 Bulletin 88/8

(45) Publication of the grant of the patent:
27.09.89 Bulletin 89/39

(84) Designated Contracting States:
AT BE CH DE FR GB IT LI LU NL SE

(56) References cited:
EP-A- 0 092 399
WO-A-84/04949
DE-A- 3 415 125
GB-A- 1 183 832
US-A- 2 819 896
US-A- 3 061 301
US-A- 3 437 333

Patent Abstracts of Japan, vol. 6, no. 193, page
(M-160)(1071), 2 October 1982

(73) Proprietor: GKN TECHNOLOGY LIMITED, Birmingham New Road, Wolverhampton West Midlands WV4 6BW (GB)

(72) Inventor: WILCOX, Lester, Thomas, 7 Reynolds Grove Perton, Wolverhampton West Midlands WV6 7NY (GB)

(74) Representative: Dodd, Graham Marshall, Guest Keen and Nettlefolds plc Group Patents and Licensing Department P.O. Box 55 Ipsley House Ipsley Church Lane, Redditch Worcestershire B98 0TL (GB)

## Description

This invention relates generally to leaf springs made of composite (fibre-reinforced plastics) material, and more particularly to the securing of other components to such springs by being clamped thereto. One example of a component which may be so secured to a spring is an axle for use in a motor vehicle, which typically is held to a leaf spring in the centre region thereof by clamping means such as U-bolts.

Whilst the clamping means, when tightened, holds the component in a fixed position relative to the spring, it is desirable to provide for the component to be held in the desired position relative to the spring during assembly thereof. A further desirable provision is that of some form of load distributing element, interposed between the clamped surfaces of the spring and component, to spread the load into the composite material of the spring and to prevent the initiation of fatigue cracks into the spring material. Such a resilient element also, if secured by adhesive to the spring, resists penetration of dirt to the clamped surfaces of the spring and component, which otherwise potentially could cause abrasive damage to the spring surface.

It has been proposed, in our European Patent Application 0092399, that a locating element having a head portion and a body portion may be utilised. The head portion of the locating element has a shallow domed or frusto-conical configuration and extends into a correspondingly shaped recess in the surface of the spring, and the body portion of the locating element extends through a load distributing element and enters an aperture in an axle component clamped to the spring. The locating element is of metal, and in the clamped assembly assists in preventing relative movement between the spring and axle component, by virtue of its engagement in the recess in the spring.

It has also been proposed, in our International Patent Application, Publication No. WO84/04949, that a load distributing element in the form of a sheet of resilient material may be provided with formations on opposite sides, extending respectively into a recess in the spring and a recess in a component clamped to the spring. Friction between the components of the assembly when the clamping means is tightened prevents relative movement between the spring and component, while the locating formations incorporated in the resilient element ensure correct positioning of the component relative to the spring during assembly. Such an assembly, however, as for the assembly first above described, requires the provision of a recess in the surface of the spring, which must to some extent increase cost of manufacture of the spring and have some effect on its properties, although the latter effect is minimised if the recess is shallow and does not have sharp edges. The resilient element may also be vulnerable to damage during assembly of the component to the spring.

It has also been proposed, in JP-A-57101139, that a leaf spring made of fibre-reinforced plastics material can be provided on its surface with an intermediate body also of fibre-reinforced plastics, and a metal plate with a positioning projection on the outside of the intermediate body. The metal plate has apertures in which projections of the intermediate body engage for security. However, because the metal plate is fitted on the outside of the intermediate body it is to some extent vulnerable and could be displaced from the spring if the spring were to be carelessly handled in production. Further, the intermediate body of fibre-reinforced plastics material gives no load distributing properties so that there is a possibility of damage to the spring in a clamped assembly, as above referred to.

It is accordingly the object of the present invention to provide a leaf spring assembly in which these disadvantages are overcome or alleviated.

The present invention provides an assembly comprising a leaf spring of composite (fibre-reinforced plastics) material; clamping means engaging said spring and also engaging a further component, to secure said component to the spring; a sheet like element of elastomeric material interposed between said component and said spring, and secured to said spring by an adhesive; and a locating element having a head portion and a body portion, the head portion engaging the spring and said body portion extending through said element of elastomeric material and engaging said component, to determine the position of said component relative to the spring, characterised in that said head portion occupies a recess in said element of elastomeric material adjacent the spring and affords a flat surface of which at least part lies against the surface of the spring.

It has been found that the securement of the element of resilient material to the spring by use of an adhesive, and thereby the positioning of the locating element relative to the spring, is adequate to ensure the correct positioning of a component such as an axle beam during assembly. No recess in the spring, for engagement by the locating element, is necessary. After the clamping means has been tightened, no engagement by locating elements or the like is necessary in any event, to prevent movement of the component relative to the spring. The locating element may be of metal, e.g. steel, so the body portion thereof is not vulnerable to damage during construction of the assembly. Alternatively a hard plastics material may be suitable.

Whilst it is preferable that the spring is provided with no recess or like surface formation, it would not be outside the scope of the invention if the spring were to be provided with a shallow recess in the region of the locating element of the assembly. The head of the locating element does not, however, enter such a recess. Such a recess might be required to be provided, for example, to provide a datum point from which the position on the spring of the assembly according to the invention can be determined. Such a datum might be required for manufacturing processes utilizing automatic machinery. A recess for this purpose can be small enough not to have any significant effect on the properties of the spring.

The invention will now be described by way of example with reference to the accompanying drawings, of which:

Figure 1 is a side elevation, partly in section, of an assembly according to the invention;

Figure 2 is a detailed section through part of the assembly;

Figure 3 shows diagrammatically a complete spring according to the invention.

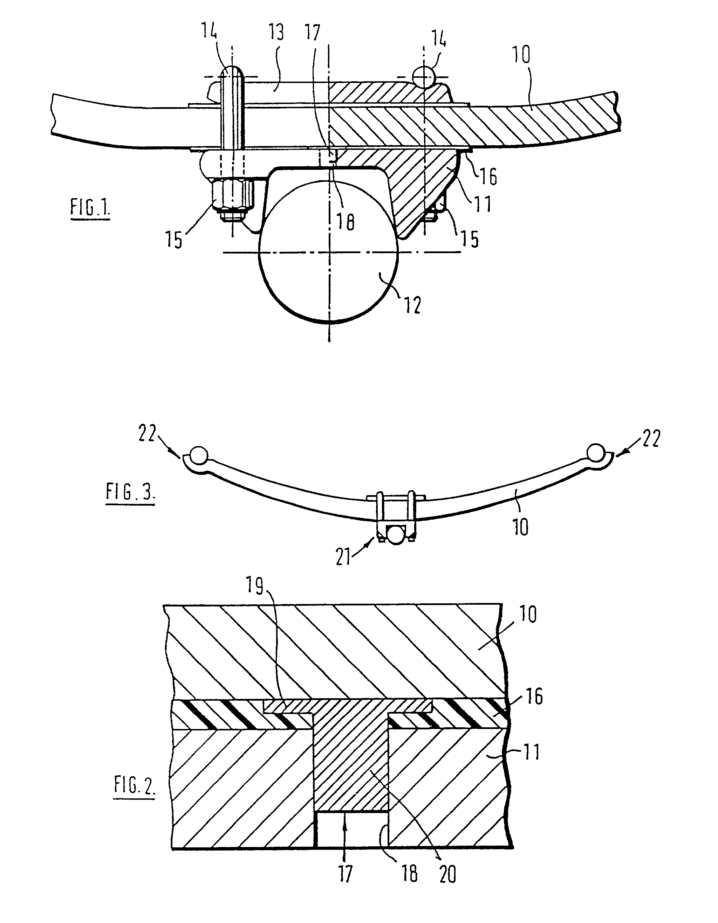

Referring firstly to Figure 1 of the drawings, there is shown a central portion of a leaf spring 10 made of composite, fibre-reinforced plastics, material. By way of example, the spring may comprise glass fibres set in an epoxy resin, the spring being formed to its final shape in a moulding process during which the resin is cured. In a typical installation, for a motor vehicle, as illustrated, a component 11, which here is a seat for an axle beam 12, is held to the spring in its central region by clamping means in the form of U-bolts 14 with nuts 15. On the side of the spring opposite the component 11, the U-bolts embrace an abutment plate 13. An element 16 in the form of a sheet of a resilient material, preferably an elastomeric plastics or a rubber material, is interposed between the component 11 and the undersurface of the spring 10. The element 16 is secured to the surface of the spring by an adhesive. A suitable adhesive capable of establishing an adhesive bond with the materials of element 16 and spring 10 can readily be selected by those skilled in the art.

The element 16 may be a relatively hard grade of a polyurethane material, an example of a suitable material being disclosed in our European Patent Application 0092399 aforesaid. By way of example, a cyanoacrylate adhesive may be used.

The element 16 holds a locating element 17 to the spring, and this is shown in detail in Figure 2 of the drawings. The locating element 17 comprises a head portion 19, which affords a flat surface which lies against the surface of the spring. The head portion has a thickness approximately half the thickness of the element 16, and occupies a correspondingly shaped recess in the element 16. The depth of the recess in the element 16 is preferably slightly greater than the thickness of head portion 19, and such clearances as may be provided by such a difference in dimensions are taken up when the assembly is clamped together and the element 16 is compressed. The locating element further comprises a body portion 10 which extends through an aperture in the element 16 and into a bore 18 in the component 11. The locating element is of metal, e.g. steel, or a hard plastics material, so that it can effectively engage the axle beam seat 11 to position the latter relative to the spring.

The locating element 17 is held in a fixed position relative to the spring by the element 16, and thus by its engagement with the component 11 provides for location of the component relative to the spring during assembly. Once the component 11 has been clamped to the spring by U-bolts 14 and nuts 15, relative movement in the assembly is resisted by the tightness of the clamped connection, and the locating element 17 serves no operational purpose, but of course remains present to provide for accurate repositioning of the component 11 should the latter be removed at some later time.

Figure 3 of the drawings shows, diagrammatically, a complete leaf spring 10 having at its centre region, indicated as 21, an assembly as shown in Figure 1. Opposite ends of the spring are provided with fittings indicated generally at 22, by which the spring can be secured to a motor vehicle where it is to be used.

## Claims

1. An assembly comprising a leaf spring (10) of composite (fibre-reinforced plastics) material; clamping means (14, 15) engaging said spring and also engaging a further component (11), to secure said component to the spring; a sheet like element (16) of elastomeric material interposed between said component (11) and said spring (10), and secured to said spring by an adhesive; and a body portion (20), the head portion (19) engaging the spring and said body portion (20) extending through said element (16) of elastomeric material and engaging said component (11), to determine the position of said component relative to the spring, characterised in that said head portion (19) occupies a recess in said element of elastomeric material adjacent the spring and affords a flat surface of which at least part lies against the surface of the spring (10).

2. An assembly according to Claim 1 further characterised in that said head portion (19) of said locating element has a depth less than the depth of said recess in said element (16) when the latter is uncompressed.

## Patentansprüche

1. Anordnung mit einer Blattfeder (10) aus Verbundwerkstoff (faserverstärktem Kunststoff), in die Blattfeder (10) und ein weiteres Bauteil (11) eingreifenden Einspannmitteln (14, 15) zur Befestigung des genannten Bauteils an der Feder, einem zwischen dem Bauteil (11) und der Feder (10) angeordnetem, an der Feder mittels Klebstoff befestigtem, plattenförmigen Element (16) aus Elastomer und einem Halteelement (17) mit einem Kopfabschnitt (19) und einem Körperabschnitt (20), wobei der Kopfabschnitt (19) in die Feder eingreift und der Körperabschnitt (20) sich durch das Elastomerelement (16) erstreckt und in das Bauteil (11) eingreift, um die Stellung des Bauteils (11) gegenüber der Feder zu bestimmen, dadurch gekennzeichnet, dass der Kopfabschnitt (19) eine zur Feder gelegene Ausnehmung in dem Elastomerelement (16) einnimmt und eine ebene Fläche schafft, die wenigstens teilweise an der Oberfläche der Feder (10) anliegt.

2. Anordnung nach Anspruch 1,

dadurch gekennzeichnet,
dass die Tiefe des Kopfabschnittes (19) des Halteelementes geringer ist als die Tiefe der genannten Ausnehmung in dem Element (16), wenn letzteres sich in nicht zusammengedrücktem Zustand befindet.

## Revendications

1. Ensemble comprenant un ressort à lame (10) d'une matière composite (matière plastique armée de fibres), un dispositif de serrage (14, 15) qui est au contact du ressort et qui est aussi au contact d'un organe supplémentaire (11) afin qu'il fixe l'organe au ressort, un élément (16) analogue à une feuille d'un matériau élastomère, placé entre ledit organe (11) et le ressort (10) et fixé au ressort par un adhésif, et un élément de positionnement (17) ayant une tête (19) et un corps (20), la tête (19) étant au contact du ressort et le corps (20) passant à travers l'élément (16) du matériau élastomère et étant au contact dudit organe (11) afin qu'il détermine la position de cet organe par rapport au ressort, caractérisé en ce que la tête (19) occupe une cavité formée dans l'élément du matériau élastomère du côté adjacent au ressort et forme une surface plate dont une partie au moins est appliquée contre la surface du ressort (10).

2. Ensemble selon la revendication 1, caractérisé en outre en ce que la tête (19) de l'élément de positionnement a une profondeur inférieure à la profondeur de la cavité formée dans l'élément (16) lorsque ce dernier n'est pas comprimé.

FIG.1.

FIG.3.

FIG.2.